# EUROPÄISCHE PATENTANMELDUNG

(11) **EP 1 201 605 A1**
(43) Veröffentlichungstag der Anmeldung: **02.05.2002**
(21) Anmeldenummer: 01123745.0
(22) Anmeldetag: 04.10.2001
(51) Int. Cl.: C01B 3/32

(54) **Vorrichtung und Verfahren zur Brennstoffversorgung eines Gaserzeugungssystems**

(30) Priorität: 25.10.2000 DE 10052776
(71) Anmelder: XCELLSIS GmbH, 73230 Kirchheim / Teck-Nabern (DE)
(72) Erfinder: Lück, Wolfgang, 89155 Erbach (DE); Schäfer, Martin, 73230 Kirchheim/Teck (DE); Theis, Erik, 73230 Kirchheim/Teck-Nabern (DE)
(74) Vertreter: Kocher, Klaus-Peter Dipl.-Phys

(57) **Zusammenfassung**

Die Erfindung betrifft eine Vorrichtung zur Brennstoffversorgung eines Gaserzeugungssystems zur Erzeugung von H₂-reichem Gas in einem Brennstoffzellensystem. Das Gaserzeugungssystem umfasst zwei Gaserzeugungskomponenten. Gemäß der Erfindung ist eine Dosiervorrichtung, die mittels einer Ventilsteuerung Brennstoff in jede der beiden Gaserzeugungskomponenten fördern kann, und ein Brennstoffspeicher vorhanden, der während eines Um- oder Zuschaltvorganges die zuzuschaltende Gaserzeugungskomponente mit Brennstoff versorgt. Weiterhin betrifft die Erfindung ein Verfahren zum Betrieb einer derartigen Vorrichtung.

## Beschreibung

Die Erfindung betrifft eine Vorrichtung zur Brennstoffversorgung eines Gaserzeugungssystems zur Erzeugung von H₂-reichem Gas in einem Brennstoffzellensystem, wobei das Gaserzeugungssystem zwei Gaserzeugungskomponenten umfaßt. Weiterhin betrifft die Erfindung ein Verfahren zum Betrieb einer derartigen Vorrichtung.

Zum Betrieb von Brennstoffzellen für mobile Anwendungen wird in einem Gaserzeugungssystem Wasserstoff aus einem Brennstoff, beispielsweise Methanol durch Wasserdampfreformierung und/oder partielle Oxidation erzeugt. Bei beiden Prozessen ist eine Förderung und Dosierung der flüssigen Reaktanten in die Gaserzeugungskomponenten notwendig.

Beim Betrieb eines Gaserzeugungssystems kann es notwendig sein, nacheinander verschiedene Gaserzeugungskomponenten mit Brennstoff zu versorgen. Üblicherweise wird dies dadurch erreicht, dass jede Gaserzeugungskomponente eine eigene, von den anderen Gaserzeugungskomponenten getrennte Dosiervorrichtung zur Förderung und Dosierung des Brennstoffs aufweist. Als nachteilig erweist sich, dass beim Um- oder Zuschalten zwischen den einzelnen Gaserzeugungskomponenten eine kontinuierliche Dosierung und Förderung von Brennstoff zu den einzelnen Gaserzeugungskomponenten nicht gewährleistet ist.

Ein Um- oder Zuschalten der Brennstoffzuführung von einer Gaserzeugungskomponente auf eine andere Gaserzeugungskomponente erfolgt üblicherweise durch Zuschalten der Dosiervorrichtung derjenigen Gaserzeugungskomponente, auf welche umgeschaltet werden soll. Die erste Gaserzeugungskomponente kann anschließend abgeschaltet werden. Dieser Wechsel zwischen verschiedenen Betriebszuständen des Gaserzeugungssystems verursacht eine Störung in der kontinuierlichen Dosierung und Förderung von Brennstoff zu den Gaserzeugungskomponenten. Außerdem wird verursacht zum Beispiel durch Totvolumina eine kontinuierliche Erzeugung von H₂-reichem Gas in den Gaserzeugungskomponenten für die nachgeschalteten Brennstoffzellen gestört. Es kommt zu einem Leistungseinbruch der Brennstoffzelle.

Aufgabe der Erfindung ist es, eine Vorrichtung zu schaffen, mit der in einer kompakten und kostengünstigen Bauart ein Umschalten zwischen verschiedenen Betriebszuständen des Gaserzeugungssystems ohne Leistungseinbruch der nachgeschalteten Brennstoffzelle möglich ist. Weiterhin ist es Aufgabe der Erfindung ein Verfahren zum Betrieb dieser Vorrichtung anzugeben.

Diese Aufgabe wird durch den Gegenstand des Patentanspruchs 1 und durch das Verfahren in Patentanspruch 3 gelöst. Vorteilhafte Ausführungen der Erfindung sind Gegenstand von Unteransprüchen.

Die erfindungsgemäße Vorrichtung weist für beide Gaserzeugungskomponenten eine gemeinsame Dosiervorrichtung auf, welche beide Gaserzeugungskomponenten über eine Ventilsteuerung mit Brennstoff versorgt. Zusätzlich ist ein Brennstoffspeicher vorhanden. Dieser Brennstoffspeicher dient während des Um- oder Zuschaltvorganges zwischen den Gaserzeugungskomponenten als Brennstoffversorgung für die zuzuschaltende Gaserzeugungskomponente.

Es ist somit möglich, beim Um- oder Zuschalten zwischen den einzelnen Gaserzeugungskomponenten eine kontinuierliche Erzeugung H₂-reichen Gases für die nachgeschalteten Brennstoffzellen zu gewährleisten. Somit wird ein Leistungseinbruch der nachgeschalteten Brennstoffzellen verhindert. Die nachgeschaltete Brennstoffzelle kann z.B. eine PEM-Brennstoffzelle mit einer protonleitenden Elektrolytmembran sein.

Ein weiterer Vorteil der Erfindung ist, dass die erfindungsgemäße Vorrichtung kompakt und kostengünstig gebaut werden kann, da nur eine Dosiervorrichtung zur Brennstoffversorgung der Gaserzeugungskomponenten benötigt wird.

Der erfindungsgemäße Brennstoffspeicher erweist sich hinsichtlich einer guten Brennstoffdosierung zu den Gaserzeugungskomponenten als besonders vorteilhaft.

In einer vorteilhaften Ausführung der Erfindung ist die Ventilsteuerung folgendermaßen aufgebaut: je ein Ventil ist zwischen der Dosiervorrichtung und dem Brennstoffspeicher, zwischen der Dosiervorrichtung und der ersten Gaserzeugungskomponente, zwischen der Dosiervorrichtung und der zweiten Gaserzeugungskomponente sowie zwischen dem Brennstoffspeicher und der zweiten Gaserzeugungskomponente geschaltet.

Der Brennstoffspeicher kann vorteilhaft vor dem Start und/oder nach Abschalten des Gaserzeugungssystems mit Brennstoff gefüllt werden.

In einem vorteilhaften Verfahren der Erfindung erfolgt das Um- oder Zuschalten von der ersten Gaserzeugungskomponente auf die zweite Gaserzeugungskomponente zweckmäßig durch folgende Verfahrensschritte, wobei von einer Versorgung der ersten Gaserzeugungskomponente durch die Dosiervorrichtung ausgegangen wird:
- Zuschalten des Brennstoffspeichers zur Brennstoffversorgung der zweiten Gaserzeugungskomponente, so dass beide Gaserzeugungskomponenten mit Brennstoff versorgt werden,
- Zuschalten der Dosiervorrichtung zur zweiten Gaserzeugungskomponente, so dass beide Gaserzeugungskomponenten gleichzeitig von der Dosiervorrichtung mit Brennstoff versorgt werden können, wobei die zweite Gaserzeugungskomponente zusätzlich mittels des Brennstoffspeichers mit Brennstoff versorgt werden kann,
- Abkoppeln des Brennstoffspeichers von der zweiten Gaserzeugungskomponente, so dass nur die Dosiervorrichtung die beiden Gaserzeugungskomponenten mit Brennstoff versorgen kann.
- Abkoppeln der Dosiervorrichtung von der ersten Gaserzeugungskomponente, so dass nur die zweite Gaserzeugungskomponente von der Dosiervorrichtung mit Brennstoff versorgt werden kann.

Es ist auch möglich, die Reihenfolge der beiden zuletzt aufgeführten Verfahrensschritte zu vertauschen.

Vorteilhafte Ausführungen der Erfindung werden in folgenden anhand einer Prinzipzeichnung beispielhaft näher erläutert.

In der Prinzipzeichnung ist ein möglicher Aufbau einer erfindungsgemäßen Vorrichtung mit beispielsweise zwei Gaserzeugungskomponenten dargestellt. Es sind auch Vorrichtungen mit mehr als zwei in Serie geschalteten Gaserzeugungskomponenten möglich. Auch auf solche Vorrichtungen ist die Erfindung ohne weiteres anwendbar.

Ein Dosiersystem **D** versorgt das Gaserzeugungssystem **GS** mit Brennstoff, z.B. mit einem Methanol-Wasser-Gemisch oder mit Benzin. Das Gaserzeugungssystem **GS** umfasst zwei Gaserzeugungskomponenten **R1** und **R2,** einen Brennstoffspeicher **S** sowie Ventile **V1, V2, V3** und **V4.** Die Gaserzeugungskomponenten **R1, R2** umfassen Reaktoren, die z.B. mittels partieller Oxidation und/oder Wasserdampfreformierung H₂-reiches Gas für ein Brennstoffzellensystem (nicht dargestellt) erzeugen. Es ist möglich, dass die beiden Gaserzeugungskomponenten Reaktoren von unterschiedlichem Typ umfassen. Weiterhin kann es sich bei zumindest einem der Gaserzeugungskomponenten **R1, R2** um einen Verdampfer zum Verdampfen von flüssig zugeführtem Kraftstoff handeln.

Zwischen dem Dosiersystem **D** und dem ersten Gaserzeugungskomponente **R1** ist das Ventil **V4,** zwischen dem Dosiersystem **D** und dem Brennstoffspeicher **S** ist das Ventil **V1,** zwischen dem Dosiersystem **D** und der zweiten Gaserzeugungskomponente **R2** ist das Ventil **V3** und zwischen dem Brennstoffspeicher **S** und der zweiten Gaserzeugungskomponente **R2** ist das Ventil **V2** geschaltet.

Die Ventile **V1, V2, V3** und **V4** dienen jeweils der Steuerung des Brennstoffstroms. Der Brennstoffspeicher **S** dient während des Umschaltvorganges von der ersten Gaserzeugungskomponente **R1** auf die zweite Gaserzeugungskomponente **R2** als Brennstoffversorgung für die zweite Gaserzeugungskomponente **R2.**

Im Betrieb des Gaserzeugungssystems **GS** wird zunächst die erste Gaserzeugungskomponente **R1** mit Kraftstoff versorgt und erzeugt daher H₂-reiches Gas für die Brennstoffzellen. Hierzu wird der Brennstoff mittels der Dosiervorrichtung **D** in die Gaserzeugungskomponente **R1** gefördert. Während dieser Betriebsphase ist nur das Ventil **V4** zwischen der Dosiervorrichtung **D** und der ersten Gaserzeugungskomponente **R1** geöffnet.

Beim Umschalten der Brennstoffzuführung von der ersten Gaserzeugungskomponenten **R1** auf die zweite Gaserzeugungskomponente **R2** wird zunächst das Ventil **V2** zwischen dem Brennstoffspeicher **S** und der zweiten Gaserzeugungskomponente **R1** geöffnet. Aus dem Brennstoffspeicher **S** kann somit Brennstoff in die zweite Gaserzeugungskomponente **R2** gefördert werden. Die erste Gaserzeugungskomponente **R1** wird während dieses Vorgangs mittels der Dosiervorrichtung **D** weiterhin mit Brennstoff versorgt.

Anschließend wird das Ventil **V3** zwischen der Dosiervorrichtung **D** und der zweiten Gaserzeugungskomponente **R2** geöffnet, wodurch die zweite Gaserzeugungskomponente **R2** gleichzeitig mittels der Dosiervorrichtung **D** und des Brennstoffspeichers **S** mit Brennstoff versorgt wird. Die erste Gaserzeugungskomponente **R1** wird mittels der Dosiervorrichtung **D** weiterhin mit Brennstoff versorgt, so dass beide Gaserzeugungskomponenten **R1** und **R2** parallel betrieben werden.

Sobald die Gaserzeugungskomponente **R2,** nach Erreichen ihrer Betriebstemperatur, ausreichend H₂-reiches Gas zum Betreiben der Brennstoffzellen erzeugt, werden die Ventile **V4, V2** zwischen der Dosiervorrichtung **D** und der ersten Gaserzeugungskomponente **R1** und zwischen dem Brennstoffspeicher **S** und der zweiten Gaserzeugungskomponente **R2** geschlossen. Somit wird nur die Gaserzeugungskomponente **R2** mittels der Dosiervorrichtung **D** mit Brennstoff versorgt.

Der Betrieb der Gaserzeugungskomponenten **R1** und **R2** sowie der Umschaltvorgang von der ersten Gaserzeugungskomponente **R1** zu der zweiten Gaserzeugungskomponente **R2** kann mit nur einer, für die beiden Gaserzeugungssystem **R1** und **R2** gemeinsamen Dosiervorrichtung **D** erreicht werden. Ferner ist ein Umschalten ohne Störung der kontinuierlichen Versorgung der Brennstoffzellen mit H₂-reichem Gas möglich. Ohne die Verwendung eines Brennstoffspeichers **S** ergibt sich nämlich die Schwierigkeit, daß beim Umschalten auf die zweite Gaserzeugungskomponente **R2** das dort erzeugte H₂-reiche Gas nicht sofort der Brennstoffzelle zur Verfügung steht, sondern zuerst ein Totvolumen in der zweiten Gaserzeugungskomponente **R2** beziehungsweise in zugehörigen Rohrleitungen mit H₂-reichem Gas gefüllt werden muß. Erst anschließend steht das in der zweiten Gaserzeugungskomponente **R2** erzeugte H₂-reiche Gas der Brennstoffzelle zur Verfügung. Das Volumen des Brennstoffspeichers **S** wird daher vorzugsweise so gewählt, daß die gespeicherte Brennstoffmenge zumindest ausreicht, das Totvolumen in der zweiten Gaserzeugungskomponente **R2** beziehungsweise den zugehörigen Rohrleitungen mit darin erzeugtem H₂-reichem Gas zu füllen. Während dieser Zeit steht dann noch die gesamte Brennstoffmenge der Dosiervorrichtung **D** für die erste Gaserzeugungskomponente **R1** zur Verfügung.

Ein erstes Anwendungsbeispiel einer solchen Vorrichtung ist bei Gaserzeugungssystemen **GS** mit einem Verdampfer und zumindest einer Reformierungseinheit gegeben, bei denen beispielsweise während einer Startphase flüssiger Brennstoff direkt in die Reformierungseinheit gegeben wird, während später im Normalbetrieb ein vorgeschalteter Verdampfer zur Verdampfung des flüssigen Brennstoffes vorgesehen ist. In diesem Fall entspricht die Reformierungseinheit der ersten Gaserzeugungskomponente **R1,** die während des Startvorganges über das Ventil **V4** direkt mit flüssigem Brennstoff beaufschlagt ist. Der Verdampfer entspricht der zweiten Gaserzeugungskomponente **R2**, die später mit flüssigem Brennstoff beaufschlagt wird, während die Zufuhr zur ersten Gaserzeugungskomponente **R1,** also direkt zur Reformierungseinheit, unterbrochen wird. Während des Umschaltvorganges wird der Verdampfer dann so lange über den Brennstoffspeicher **S** versorgt, bis das Totvolumen im Verdampfer mit gasförmigen Brennstoff gefüllt ist. Zusätzlich muß eine nicht dargestellte Versorgungsleitung vom Verdampfer - also **R2 -** zur Reformierungseinheit - also **R1 -** vorgesehen sein, um im Normalbetrieb den gasförmigen Brennstoff vom Verdampfer zur Reformierungseinheit zu transportieren.

Ein zweites Ausführungsbeispiel einer solchen Vorrichtung entspricht einem Gaserzeugungssystem **GS** mit zwei seriell durchströmten Reformierungseinheiten, wobei während des Startvorganges nur eine der Reformierungseinheiten **R1** mit Brennstoff versorgt wird, während im Normalbetrieb die andere oder auch beide Reformierungseinheiten **R2, R1** mit Brennstoff versorgt werden. Der Brennstoffspeicher **S** ist wiederum vorgesehen, um beim Umschaltvorgang die zweite Reformierungseinheit **R2** so lange mit Brennstoff zu versorgen, bis das zugehörige Totvolumen mit H₂-reichem Gas gefüllt ist. Auch in diesem Ausführungsbeispiel ist es möglich einem oder beiden Reformierungseinheiten einen Verdampfer vorzuschalten.

Ein weiteres Ausführungsbeispiel betrifft ein Gaserzeugungssystem **GS** mit zumindest zwei Reformierungseinheiten, wobei die beiden Reformierungseinheiten beispielsweise zur Versorgung mit H₂-reichem Gas während unterschiedlichen Lastzuständen vorgesehen sind. Beispielsweise kann eine der beiden Reformierungseinheiten zur Abdeckung der Spitzenlast vorgesehen sein und daher lediglich ab einer vorgegebenen Lastgrenze zugeschaltet werden. In diesem Fall wären die beiden Reformierungseinheiten also parallel geschaltet, wobei die ständig betriebene Reformierungseinheit der Gaserzeugungskomponente **R1** entspricht, während die zuschaltbare Reformierungseinheit der zweiten Gaserzeugungskomponente **R2** entspricht. Es ist jedoch auch möglich, die beiden Reformierungseinheiten seriell zu durchströmen, wobei dann die zuschaltbare Reformierungseinheit oberhalb der Lastgrenze durch Zuschalten der Brennstoffdosierung aktiviert wird, während die zuschaltbare Reformierungseinheit unterhalb der Lastgrenze lediglich passiv durchströmt wird.

Wir aus den vorstehend beschriebenen Ausführungsbeispielen zu entnehmen ist, ist die erfindungsgemäße Vorrichtung beziehungsweise das erfindungsgemäße Verfahren für eine Vielzahl von Gaserzeugungssystemen anwendbar, wobei es auf die konkrete Verschaltung und die Anzahl der Komponenten nicht ankommt. Entscheidend ist lediglich die Tatsache, daß einzelne Gaserzeugungskomponenten zugeschaltet oder zwischen zumindest zwei Gaserzeugungskomponenten umgeschaltet wird, wobei der Brennstoffspeicher zur Überbrückung von Totzeiten eingesetzt wird.

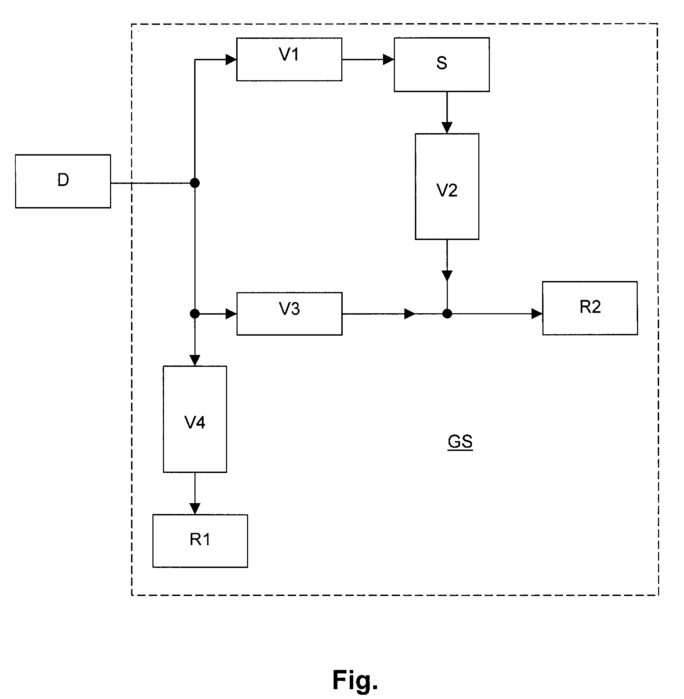

## Patentansprüche

1. Vorrichtung zur Brennstoffversorgung eines Gaserzeugungssystems (GS) zur Erzeugung von H₂-reichem Gas in einem Brennstoffzellensystem, umfassend zwei Gaserzeugungskomponenten (R1, R2), **gekennzeichnet, durch** eine gemeinsame Dosiervorrichtung (D), die mittels einer Ventilsteuerung Brennstoff in jede der beiden Gaserzeugungskomponenten (R1, R2) fördern kann, und einem Brennstoffspeicher (S), der während eines Um- oder Zuschaltvorganges die zuzuschaltende Gaserzeugungskomponente (R2) mit Brennstoff versorgt.

2. Vorrichtung nach Anspruch 1, **dadurch gekennzeichnet, dass** zwischen der Dosiervorrichtung (D) und der ersten Gaserzeugungskomponente (R1) ein Ventil (V4), zwischen dem Brennstoffspeicher (S) und der Dosiervorrichtung (D) ein Ventil (V1), zwischen dem Brennstoffspeicher (S) und der zweiten Gaserzeugungskomponente (R2) ein Ventil (V2) und zwischen der Dosiervorrichtung (D) und der zweiten Gaserzeugungskomponente (R2) ein Ventil (V3) zur Steuerung des Brennstoffstroms geschaltet ist.

3. Verfahren zum Betrieb einer Vorrichtung nach einem der vorangehenden Ansprüche zum Umschalten von der ersten Gaserzeugungskomponente (R1) auf die zweite Gaserzeugungskomponente (R2) oder zum Zuschalten der zweiten Gaserzeugungskomponente (R2) durch folgende Verfahrensschritte:
- Versorgung der ersten Gaserzeugungskomponente (R1) mit Brennstoff mittels der Dosiervorrichtung (D),
- Zuschalten des Brennstoffspeichers (S) zu der zweiten Gaserzeugungskomponente (R2), so dass die zweite Gaserzeugungskomponente (R2) mit Brennstoff versorgt wird,
- Zuschalten der Dosiervorrichtung (D) zu der zweiten Gaserzeugungskomponente (R2), so dass die erste und zweite Gaserzeugungskomponente (R1, R2) gleichzeitig von der Dosiervorrichtung (D) mit Brennstoff versorgt wird, wobei die zweite Gaserzeugungskomponente (R2) gleichzeitig von der Dosiervorrichtung (D) und dem Brennstoffspeicher (S) mit Brennstoff versorgt wird,
- Abkoppeln des Brennstoffspeichers (S) von der zweiten Gaserzeugungskomponente (R2), so dass nur die Dosiervorrichtung (D) den Brennstoff in die beiden Gaserzeugungskomponenten (R1, R2) fördert,
- gegebenenfalls Abkoppeln der Dosiervorrichtung (D) von der ersten Gaserzeugungskomponente (R1), so dass nur die zweite Gaserzeugungskomponente (R2) von der Dosiervorrichtung (D) mit Brennstoff versorgt wird.

4. Verfahren zum Betrieb einer Vorrichtung nach Anspruch 2 zum Umschalten von der ersten Gaserzeugungskomponente (R1) auf die zweite Gaserzeugungskomponente (R2) oder zum Zuschalten der zweiten Gaserzeugungskomponente (R2) durch folgende Verfahrensschritte:
- Schließen der Ventile (V1, V2, V3) zwischen der Dosiervorrichtung (D) und dem Brennstoffspeicher (S), zwischen der Dosiervorrichtung (D) und der zweiten Gaserzeugungskomponente (R2) sowie zwischen dem Brennstoffspeicher (S) und der zweiten Gaserzeugungskomponente (R2) und Öffnen des Ventils (V4) zwischen der Dosiervorrichtung (D) und der ersten Gaserzeugungskomponente (R1), so dass der Brennstoff mittels der Dosiervorrichtung (D) in die erste Gaserzeugungskomponente (R1) gefördert wird,
- Öffnen des Ventils (V2) zwischen dem Brennstoffspeicher (S) und der zweiten Gaserzeugungskomponente (R2), so dass Brennstoff aus dem Brennstoffspeicher (S) in die zweite Gaserzeugungskomponente (R2) zudosiert wird,
- Öffnen des Ventils (V3) zwischen der Dosiervorrichtung (D) und der zweiten Gaserzeugungskomponente (R2), so dass die zweite Gaserzeugungskomponente (R2) gleichzeitig mit Brennstoff aus dem Brennstoffspeicher (S) und der Dosiervorrichtung (D) versorgt wird,
- Schließen der Ventile (V2, V4) zwischen der Dosiervorrichtung (D) und der ersten Gaserzeugungskomponente (R1) sowie zwischen dem Brennstoffspeicher (S) und der zweiten Gaserzeugungskomponente (R2), so dass die erste Gaserzeugungskomponente (R1) abgeschaltet und Brennstoff nur durch die Dosiervorrichtung (D) in die zweite Gaserzeugungskomponente (R2) gefördert wird, oder Schließen des Ventils (V2) zwischen dem Brennstoffspeicher (S) und der zweiten Gaserzeugungskomponente (R2), so daß Brennstoff nur durch die Dosiervorrichtung (D) in die erste und zweite Gaserzeugungskomponente (R1, R2) gefördert wird.
